# EUROPEAN PATENT APPLICATION

(11) **EP 4 840 623 A1**
(43) Date of publication of application: **18.11.2026**
(21) Application number: 26178516.6
(22) Date of filing: 13.05.2026
(51) Int. Cl.: B32B 1/08, B05D 7/14, B32B 7/12, B32B 15/18, B32B 15/085, B32B 27/12, B32B 27/32, C08J 7/04, F16L 58/10

(54) **EXTERNAL PROTECTIVE COATING FOR A PIPE, A PIPE WITH A PROTECTIVE COATING, AND A METHOD FOR MANUFACTURING AN EXTERNAL PROTECTIVE COATING FOR A PIPE**

(30) Priority: 16.05.2025 PL 45205725
(71) Applicant: "IZOSTAL" Spolka akcyjna, 47-113 Kolonowskie (PL); Proma Spolka z ograniczona odpowiedzialnoscia, 47-120 Zawadzkie (PL); Akademia Gorniczo-Hutnicza im. Stanislawa Staszica w Krakowie, 30-059 Krakow (PL)
(72) Inventor: Brys, Katarzyna, 47-110 Kolonowskie (PL); Bok, Adam, 47-113 Staniszcze Wielkie (PL); Panchyrz, Adam, 47-126 Kielcza (PL); Smieszkol, Robert, 47-120 Zawadzkie (PL); Detko, Blazej, 47-100 Strzelce Opolskie (PL); Wojdyla, Mariusz, 47-100 Strzelce Opolskie (PL); Matheja, Marek, 47-110 Kolonowskie (PL); Wisniowski, Rafal, 30-698 Kraków (PL); Toczek, Przemyslaw, 49-300 Brzeg (PL); Ziaja, Jan, 30-733 Kraków (PL); Laska, Jadwiga, Zabierzów 32-080 (PL); Zlotkowski, Albert, 31-217 Kraków (PL); Matachowski, Filip, 32-060 ciejowice (PL); Teper, Wojciech, 34-400 Nowy Targ (PL); Kowalski, Tomasz, 28-200 Czajków Po udniowy (PL); Kowalska-Kubsik, Iwona, 32-091 Micha owice (PL); Skrzypaszek, Krzysztof, 32-080 Zabierzów (PL); Kania, Zbigniew, 40-761 Katowice (PL); Krawczyk, Piotr, 47-133 Barut (PL); Mazurek, Piotr, 42-700 Lubliniec (PL)
(74) Representative: Galazkiewicz, Wlodzimierz

(57) **Abstract**

The subject of the invention is an external protective coating for a pipe (P1) and a method for its manufacture, finding application in pipelines installed by trenchless methods. The protective coating for the pipe (P1) comprises an anti-corrosion insulation (with an epoxy layer (w1), a polyethylene copolymer layer (w2), and a polyolefin layer (w3) and a mechanical insulation (w5) (a laminate layer of resins and glass fibre fabric) chemically bonded to it. The invention is characterized in that the mechanical insulation (w5) is bonded to the polyolefin layer (w3) by means of an additional adhesive layer (w4) with a thickness of at least 100 µm, comprising a powder of ethylene copolymer modified with maleic anhydride or a powder of propylene copolymer modified with maleic anhydride. The thickness of the epoxy layer (w1) is at least 125 µm, the polyethylene copolymer layer (w2) is at least 150 µm, the polyolefin layer (w3) is from 1.5 mm to 3.8 mm, and the mechanical insulation layer (w5) is at least 5 mm. The manufacturing method comprises applying a powder of ethylene copolymer or propylene modified with maleic anhydride onto the heated polyolefin layer (w3) before applying the mechanical insulation (w5).

## Description

### Field of the Invention

The invention relates to an external protective coating for a pipe, in particular a steel pipe, a pipe with an external protective coating, and a method for manufacturing the external protective coating for a pipe. The coating according to the invention finds application in the production of anti-corrosion insulations that are additionally protected against mechanical damage, especially in pipelines intended for installation using trenchless technologies, such as horizontal directional drilling (HDD).

### Background of the Invention

Steel pipes are known to be covered with multi-layer anti-corrosion insulations to protect against corrosion. The industry standard is three-layer polyethylene (3LPE) or polypropylene (3LPP) coating systems, typically consisting of an epoxy layer applied directly to the steel pipe, a middle adhesive layer in the form of a polyethylene copolymer, and an outer polyolefin layer (polyethylene or polypropylene). For example, the product catalogue of Izostal S.A., publicly available since at least April 13, 2024 (according to web.archive.org), discloses three-layer insulation coatings 3LPE and 3LPP, as well as glass-resin laminates used as mechanical protection. It is indicated therein that the glass-resin laminate has a chemical bond with the surface of the anti-corrosion insulation over its entire surface, which is intended to ensure adhesion and shear strength.

In the case of pipeline installation using trenchless methods, the protective coating is exposed to extreme mechanical loads, including high shear and abrasive forces, during the pulling of the pipe through the rock formation. Standard 3LPE/3LPP coatings do not have sufficient mechanical resistance, which can lead to their damage and loss of protective properties.

The closest prior art for the present invention is the solution disclosed in Chinese patent application CN112046045 A. This document describes an internal and external three-layer corrosion-resistant coating for a steel pipe. This coating consists of a metal pipe body, an anti-corrosion epoxy layer, a layer of modified adhesive grafted with maleic anhydride (constituting a modified polyethylene or polypropylene adhesive), and a layer of special polyolefin pipeline material. CN112046045 A also specifies the thicknesses of the individual layers, e.g., the thickness of the epoxy layer is 0.1 mm-0.5 mm, and the thickness of the modified adhesive layer grafted with maleic anhydride is 0.1 mm-0.5 mm. This solution focuses on anti-corrosion protection and does not provide for a dedicated, external mechanical insulation layer (e.g., a glass-resin laminate) that protects the pipe from extreme loads in trenchless technologies, nor an effective way of ensuring a durable bond of such a layer with the anti-corrosion insulation.

Japanese patent application JP2020192774A discloses a method of manufacturing a steel pipe coated with a polyolefin resin with a two-layer adhesive, by sequentially laminating a primer layer of epoxy resin powder, an adhesive layer, and a polyolefin resin layer. In document JP2020192774A, the powder adhesive is a product of modifying an ethylene-acrylate copolymer with maleic anhydride. The main goal of this solution is to improve adhesion and prevent cohesion failure of the adhesive within the anti-corrosion insulation itself, not to provide a durable bond with a separate, external mechanical insulation layer.

Japanese patent application JPH07186326 A describes a method for obtaining a polyolefin resin coated steel, where a linear low-density polyethylene (LLDPE) modified with maleic anhydride is used as the adhesive. The purpose of this solution is high adhesion even at low bonding temperatures and in a short time. The solution thus relates to the adhesion of the anti-corrosion coating itself directly to the pipe, and not to the method of durably bonding this coating to an additional, external mechanical layer.

Japanese patent application JPH07205371 A describes an external coating for a steel pipe consisting of a modified polyolefin layer, a foamed polyolefin layer, and a fibre-reinforced modified polyolefin layer. As the fibre-reinforced modified polyolefin, a material with the addition of glass or slag fibres to a polyolefin modified with maleic anhydride is used. This solution constitutes a composite polyolefin layer, but does not describe an additional adhesive layer between the polyolefin layer and a separate, external mechanical insulation layer, which is applied to protect against loads in trenchless technologies.

International patent application WO2024/042129 A1 discloses a coating for a metal pipe consisting of an anti-corrosion, thermoplastic, and protective layer. The protective layer is made of a fibre-reinforced thermosetting material, such as polyester or epoxy resin with glass fibre. This document generally describes the protective layer, but does not specify the specific chemical bonding mechanism between the external anti-corrosion layer (polyolefin) and the dedicated mechanical layer in the context of extreme loads.

International patent application WO2009/094977 A1 discloses an anti-corrosion coating for a pipe, consisting of an epoxy resin primer layer, an adhesive layer of ethylene copolymer in the form of a film with a thickness of about 200 µm, and a layer of fibres (glass, carbon, or aramid) with a thickness of 2 mm, intended to increase the pipe's resistance to cracking. This solution also does not directly address the problem of providing an exceptionally durable, chemical bond between the outer polyolefin layer of the anti-corrosion insulation and a separate, external mechanical insulation layer by means of a powder adhesive layer.

Other documents, such as Chinese patent application CN117343579 A, US patents US5536349 A and US0603906 A1, and Polish patent PL365079 A1, describe various compositions and structures of protective coatings for pipes. However, none of these documents sufficiently addresses the problem of providing an exceptionally durable, chemical bond between the external anti-corrosion insulation layer (polyolefin) and a dedicated, external mechanical insulation layer in the context of demanding trenchless installations.

The essential technical problem in all known solutions is to provide a durable and strong connection between the polyolefin layer, which constitutes the outer part of the anti-corrosion insulation, and an additional, separate mechanical insulation layer, formed from a laminate based on resins and glass fibre fabric. In particular, there is no effective solution that would guarantee sufficient adhesion (e.g., above 125 N/cm²) and shear resistance (e.g., above 100 N/cm²) under the extreme mechanical loads occurring during the installation of pipelines by trenchless methods. Insufficient adhesion leads to the risk of the mechanical layer slipping or delaminating, which consequently leads to exposure and damage to the actual anti-corrosion insulation, and consequently to corrosion of the pipe.

### Summary of the Invention

The object of the present invention is to develop a protective pipe coating structure that would be characterized by high resistance to mechanical loads and shear, and in particular would provide a durable, chemical bond between the anti-corrosion insulation and the mechanical insulation, eliminating the risk of their separation during trenchless installation, the pipe with the protective coating, and a method for manufacturing the external protective coating for a pipe.

The construction of gas pipelines using trenchless methods should be carried out under a strict and characteristic technological regime for this method, so that no damage occurs to the layers of its protective coating. The task of the external layer, which constitutes the mechanical insulation, is to protect the anti-corrosion insulation layers during the installation of the pipeline in the ground. The mechanical insulation should be characterized by high resistance to mechanical loads and high shear resistance, which protects it from slipping off the pipe during installation work in the rock formation. In this regard, it is very important to have a specialized execution of the coating layers, maintaining very high adhesion parameters, starting from the preparation of the steel pipe surface, the application of the anti-corrosion insulation, and ending with the application of the mechanical insulation under stable, repeatable conditions, with strict adherence to the established technological regime. The invention solves a technical problem consisting in the development of a pipe structure with an external protective coating, containing a layered anti-corrosion insulation permanently bonded, over its entire surface, with an additional mechanical insulation. Thanks to this, the laminate layer does not lose its protective properties and does not slip during the installation of the pipe in the borehole. A pipe with a protective coating and a method for manufacturing the external protective coating have also been developed, ensuring a sufficiently strong connection of the anti-corrosion insulation with the mechanical insulation over the entire surface, allowing its protective properties to be maintained during drilling, even with partial violation of the continuity of the laminate mechanical insulation.

The external protective coating for the pipe is constituted by an anti-corrosion insulation and a mechanical insulation chemically bonded to it. The anti-corrosion insulation comprises an epoxy layer located directly on the pipe, covered sequentially by a polyethylene copolymer layer and a polyolefin layer, while the mechanical insulation is a laminate layer comprising polyester or epoxy resins and glass fibre fabric. The essence of the external protective coating is that the mechanical insulation is chemically bonded to the polyolefin layer by means of an additional adhesive layer with a thickness of at least 100 µm, comprising a powder of ethylene copolymer or a powder of propylene copolymer, modified with maleic anhydride.

It is advantageous when the polyolefin layer is polyethylene, and the adhesive layer based on ethylene copolymer is polyethylene modified with maleic anhydride, or it is advantageous when the polyolefin layer is polypropylene, and the adhesive layer based on propylene copolymer is polypropylene modified with maleic anhydride.

It is advantageous when the thickness of the epoxy layer is at least 125 µm.

It is also advantageous when the thickness of the polyethylene copolymer layer is at least 150 µm.

It is also advantageous when the thickness of the polyolefin layer is from 1.5 mm to 3.8 mm.

Furthermore, it is advantageous when the thickness of the layer constituting the mechanical insulation is at least 5 mm.

The pipe according to the invention comprises an external protective coating with the indicated features.

The method for manufacturing the external protective coating for a pipe comprises the following sequential known technological operations: preparation of the external surface of the pipe, heating of the pipe area to a technological temperature, application of three successive layers of anti-corrosion insulation: an epoxy layer, a polyethylene copolymer layer, and a polyolefin layer, and then - application of a mechanical insulation, which is a laminate coating layer based on polyester or epoxy resins and glass fibre fabric. The essence of the method is that before applying the mechanical insulation layer onto the polyolefin layer, heated to a temperature in the range of 170 °C to 230 °C, a powder of ethylene copolymer modified with maleic anhydride or a powder of propylene copolymer modified with maleic anhydride is applied, forming an additional adhesive layer, wherein the application of the copolymer powder is performed uniformly with respect to the rotational speed and translational speed of the pipe.

It is advantageous when the application of the powder of ethylene copolymer or the powder of propylene copolymer is performed by means of a rotating drum with a profiled roller surface, having uniformly distributed longitudinal grooves, rotating uniformly with respect to its axis, which is also parallel to the axis of rotation of the pipe.

It is also advantageous when the applied powder of ethylene copolymer or propylene copolymer is additionally pressed into the polyolefin layer by means of a roller, rolling on its surface.

It is advantageous when the polyolefin layer is additionally heated before the application of the adhesive layer.

It is advantageous when polyethylene is used as the polyolefin layer, and polyethylene modified with maleic anhydride is used as the adhesive layer based on ethylene copolymer, or it is advantageous when polypropylene is used as the polyolefin layer, and polypropylene modified with maleic anhydride is used as the adhesive layer based on propylene copolymer.

The pipe according to the invention with an external protective coating having the indicated features is obtained as a result of implementing the method according to the invention.

### Brief Description of the Drawings

The subject of the invention, in exemplary embodiments, has been illustrated in the drawing, in which: Fig. 1 shows a perspective view of the pipe, where the layers forming the external protective coating are shown in a cross-section and layered view, while Fig. 2 shows a simplified view of the device for implementing the step of the method, consisting in applying the adhesive layer on the basis of a powder, and Fig. 3 - the drum of this device.

### Detailed Description of the Invention

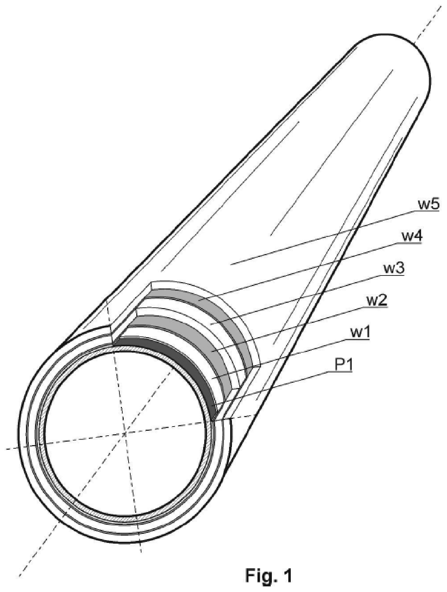

The steel pipe (P1) (Fig. 1) has an external protective coating substantially along its entire length. The protective coating is composed of an anti-corrosion insulation and a mechanical insulation, which is chemically bonded to it. The anti-corrosion insulation consists of three basic layers, which are sequentially: an epoxy layer (w1) with a thickness of 130 µm, situated directly on the steel pipe (P1), a polyethylene copolymer layer (w2) with a thickness of 160 µm, and a polyolefin layer (w3), which is polyethylene with a thickness of 2.5 mm. On the polyolefin layer, there is an adhesive layer (w4) with a thickness of 120 µm, formed from a powder of ethylene copolymer, which is polyethylene modified with maleic anhydride, chemically bonding the anti-corrosion insulation with the mechanical insulation (w5), which is a laminate layer with a thickness of 5 mm, comprising polyester resin and glass fibre fabric.

Another example embodiment of the coating differs in that the laminate layer of the mechanical insulation (w5) is comprising epoxy resin and layers of glass fibre fabric.

In another example embodiment of the external protective coating, polypropylene constitutes the polyolefin layer (w3), and the adhesive layer (w4) is formed from a powder of propylene copolymer, which is polypropylene modified with maleic anhydride. The laminate layer, constituting the mechanical insulation (w5), is made on the basis of epoxy resins and layers of glass fibre fabric.

Another example embodiment differs from the previous one in that the mechanical layer (w5) is made of glass fibre fabric and polyester resin.

In each of the possible embodiments of the invention, the pipe (P1) may also have additional single-layer or multi-layer coatings, protecting its internal surface.

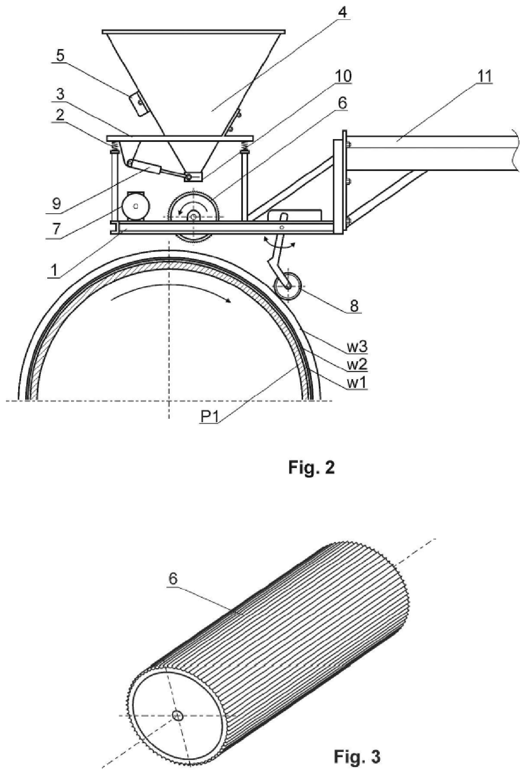

To produce the protective coating according to the invention, the surface of the steel pipe (P1) is prepared using known methods, including abrasive blasting, dust removal, degreasing, and reduction of surface salinity. Next, the area of the pipe (P1) is heated to a technological temperature of 200 °C and the next three layers of anti-corrosion insulation are applied by the extrusion method. The technological temperature range is from 180 °C to 230 °C. First, an epoxy layer (w1) with a thickness of min. 125 µm is applied, then a polyethylene copolymer layer (w2) with a thickness of min. 150 µm, and a polyolefin layer (w3) of polyethylene, with a thickness of 2 mm. In the next step, onto the heated, plastic polyethylene, constituting the polyolefin layer (w3), a powder of ethylene copolymer, which is polyethylene modified with maleic anhydride, at ambient temperature, is applied. The production process is designed so that after heating the pipe (P1) to the technological temperature, the temperature of the polyolefin layer (w3) during the application of the copolymer powder is in the range of 170 °C to 230 °C. The ethylene copolymer powder partially melts into the plastic polyolefin layer (w3), creating an additional adhesive layer (w4). The application of the ethylene copolymer powder is performed uniformly with respect to the rotational speed and translational speed of the pipe (P1) by means of a powder application module (Fig. 2), comprising a rigid frame (1), on which a platform (3) is supported by means of elastic elements (2), to which a hopper (4) for the ethylene copolymer powder is rigidly attached, in the shape of a funnel, on one of its side surfaces is attached a pneumatic vibrator (5), operating in a pulsating mode, supporting the smooth flow of powder through the valve (10). The valve (10) has a slot of adjustable width, the longitudinal axis of which is oriented transversely to the longitudinal axis of the pipe (P1) and the longitudinal axis of the rotating drum (6) located below it (Fig. 3). The rotating drum (6) with a profiled surface has longitudinal grooves, arranged uniformly on the roller surface and during the application of the powder, rotates at a constant, set speed, around its longitudinal axis. The grooves capture the copolymer powder and distribute it evenly on the surface of the heated polyolefin layer (w3) of polyethylene. The drive of the drum (6) is an electric motor (7) controlled by frequency, connected to it by means of a power transmission mechanism, not shown in the drawing. By means of the industrial HMI interface, connected to the motor, the rotational speed of the motor (7), coupled with the rotating drum (6), is regulated, adjusting the amount of distributed ethylene copolymer powder to the rotational speed and translational speed of the pipe (P1).

The supply and dosing of powder to the drum (6) is carried out through a dosing element (10), located at the bottom of the hopper (4), equipped with an adjustable slot parallel to the axis of the drum (6), above which it is situated. The axis of rotation of the drum (6) is parallel to the axis of rotation of the pipe (P1). The adjustment of the slot opening width and its opening and closing is realized by a pneumatic actuator (9), controlled by a pneumatic valve. After application to the softened polyolefin layer (w3), the ethylene copolymer powder is pressed into the polyolefin layer (w3) by means of a pneumatic mechanism, equipped with a pressure roller (8), rolling on the surface of the polyolefin layer (w3), which ensures good adhesion and uniformity of the formed layer. The powder application module is equipped with a series of sensors and safety interlocks - the pressure roller (8) automatically lifts, the drum stops, and the dosing element closes when the conveyor stops. The system can operate in various modes: service, manual, semi-automatic, and automatic, which allows for flexible adaptation of the process to various production requirements.

The amount of powder supplied depends mainly on the speed and size of the pipe (P1) and the thickness of the adhesive layer (w4). With an expected production efficiency of the finished pipe, with a complete insulation system, at a level of approx. 220 m²/h, a powder stream with a pour intensity at the level of 40 to 50 kg/h should be supplied. This value takes into account losses caused by powder spillage at a rate of 30-35% of the mass. Such an intensity of powder supply, for the assumed speed of pipe production, allows for the creation of an adhesive layer (w4) with an average thickness of 100 µm, which has been confirmed by microscopic analysis. This layer is bonded to the polyolefin substrate over half of its thickness, while the remaining part of the adhesive layer (w4) is ready to bond with the resin used during the application of the laminate layer.

Finally, on the adhesive layer (w4), the mechanical insulation (w5) is applied by winding, constituting a composite based on polyester resin and layers of glass fibre fabric with a thickness of 5 mm. The resin bonds with the adhesive layer (w4), and at the same time forms a uniform layer with the glass fabric. Thanks to this, the mechanical insulation (w5) has an adhesion to the other layers at a level exceeding 125 N/cm² and is resistant to shear at a level exceeding 100 N/cm², which is confirmed by the conducted laboratory strength tests. In addition, the protective coating obtained by the method according to the invention has other parameters, such as impact resistance, Shore hardness, resistance to indentation and to tearing, at a level corresponding to the parameters of standard laminate coatings.

In another example of the method's implementation, the laminate layer forming the mechanical insulation (w5) is made on the basis of glass fibre fabric and epoxy resins.

It is also possible to have an example of the method's implementation, in which the polyolefin layer (w3) is made of polypropylene. In this example, the adhesive layer (w4) is made on the basis of a powder of propylene copolymer, which is polypropylene modified with maleic anhydride. The mechanical insulation (w5) is made on the basis of polyester resin and layers of glass fibre fabric.

A variant of the above method is also possible, in which the laminate layer forming the mechanical insulation (w5) is made on the basis of glass fibre fabric and epoxy resins.

In the above examples, the successive layers of anti-corrosion insulation and the adhesive layer (w4) and mechanical insulation (w5) are applied one after another in a single technological cycle. The application of the adhesive layer (w4) and the mechanical insulation layer (w5) immediately after the application of the anti-corrosion insulation layers is most advantageous, however, examples of the method's implementation are possible which consist in applying the adhesive layer (w4) and the mechanical insulation layer (w5) on previously manufactured pipes with anti-corrosion insulation. For this purpose, after the anti-corrosion insulation application modules, and before the adhesive layer (w4) application module, a module is used, which heats the surface of the polyolefin layer (w3) to a temperature in the range of 170 °C to 230 °C, e.g., using infrared radiation.

The pressing of the applied powder of ethylene copolymer or propylene copolymer to the polyolefin layer (w3) is optional and examples of the method's implementation without the use of the pressure roller (8) are possible.

The obtained parameters of the protective coating eliminate the possibility of the laminate layer of mechanical insulation (w5) slipping from the pipe, even after its local rupture, and thus - eliminate cases of damage on large surfaces, of the unprotected anti-corrosion coating and blocking of boreholes with the laminate.

## Claims

1. An external protective coating for a pipe (P1), which is constituted by an anti-corrosion insulation and a mechanical insulation (w5) chemically bonded to it, wherein the anti-corrosion insulation comprises an epoxy layer (w1) located directly on the pipe (P1), covered sequentially by a polyethylene copolymer layer (w2) and a polyolefin layer (w3), and the mechanical insulation (w5) is a laminate layer based on polyester or epoxy resins and glass fibre fabric, **characterized in that** the mechanical insulation (w5) is chemically bonded to the polyolefin layer (w3) by means of an additional adhesive layer (w4) with a thickness of at least 100 µm, comprising a powder of an ethylene copolymer modified with maleic anhydride or a powder of a propylene copolymer modified with maleic anhydride, wherein the thickness of the epoxy layer (w1) is at least 125 µm, the thickness of the polyethylene copolymer layer (w2) is at least 150 µm, the thickness of the polyolefin layer (w3) is from 1.5 mm to 3.8 mm, and the thickness of the layer constituting the mechanical insulation (w5) is at least 5 mm.

2. An external protective coating according to claim 1, **characterized in that** the polyolefin layer (w3) is polyethylene, and the adhesive layer (w4) based on ethylene copolymer is polyethylene modified with maleic anhydride.

3. An external protective coating according to claim 1, **characterized in that** the polyolefin layer (w3) is polypropylene, and the adhesive layer (w4) based on propylene copolymer is polypropylene modified with maleic anhydride.

4. A pipe (P1) with an external protective coating, **characterized in that** it comprises a protective coating according to any one of claims 1 to 3.

5. A method for manufacturing an external protective coating for a pipe (P1), comprising the following sequential known technological operations: preparation of the external surface of the pipe (P1), heating of the area of the pipe (P1) to a technological temperature, application of three successive layers of anti-corrosion insulation: an epoxy layer (w1), a polyethylene copolymer layer (w2), and a polyolefin layer (w3), and then - application of a mechanical insulation (w5), which is a laminate coating layer based on polyester or epoxy resins and glass fibre fabric, **characterized in that** before applying the mechanical insulation layer (w5) onto the polyolefin layer (w3), heated to a temperature in the range of 170 °C to 230 °C, a powder of ethylene copolymer modified with maleic anhydride or a powder of propylene copolymer modified with maleic anhydride is applied, forming an additional adhesive layer (w4), wherein the application of the powder is performed uniformly with respect to the rotational speed and translational speed of the pipe (P1).

6. The method according to claim 5, **characterized in that** the application of the powder of ethylene copolymer or the powder of propylene copolymer is performed by means of a rotating drum (6) with a profiled roller surface, having uniformly distributed longitudinal grooves, rotating uniformly with respect to its axis, which is parallel to the axis of rotation of the pipe (P1).

7. The method according to claim 5 or 6, **characterized in that** the applied powder of ethylene copolymer or propylene copolymer is additionally pressed into the polyolefin layer (w3) by means of a roller (8), rolling on its surface.

8. The method according to claim 5, **characterized in that** the polyolefin layer (w3) is additionally heated before the application of the adhesive layer (w4).

9. The method according to claim 5, **characterized in that** polyethylene is used as the polyolefin layer (w3), and polyethylene modified with maleic anhydride is used as the adhesive layer (w4) based on ethylene copolymer.

10. The method according to claim 5, **characterized in that** polypropylene is used as the polyolefin layer (w3), and polypropylene modified with maleic anhydride is used as the adhesive layer (w4) based on propylene copolymer.

11. A pipe (P1) with an external protective coating, **characterized in that** the protective coating is obtained by the method according to any one of claims 5 to 10.

## Amended claims

### Amended claims in accordance with Rule 137(2) EPC.

1. An external protective coating for a pipe (P1), which is constituted by an anti-corrosion insulation and a mechanical insulation (w5) chemically bonded to it, wherein the anti-corrosion insulation comprises an epoxy layer (w1) located directly on the pipe (P1), covered sequentially by a polyethylene copolymer layer (w2) and a polyolefin layer (w3), and the mechanical insulation (w5) is a laminate layer based on polyester or epoxy resins and glass fibre fabric, **characterized in that** the mechanical insulation (w5) is chemically bonded to the polyolefin layer (w3) by means of an additional adhesive layer (w4) with a thickness of at least 100 µm, comprising a powder of an ethylene copolymer modified with maleic anhydride or a powder of a propylene copolymer modified with maleic anhydride, wherein the thickness of the epoxy layer (w1) is at least 125 µm, the thickness of the polyethylene copolymer layer (w2) is at least 150 µm, the thickness of the polyolefin layer (w3) is from 1.5 mm to 3.8 mm, and the thickness of the layer constituting the mechanical insulation (w5) is at least 5 mm.

2. An external protective coating according to claim 1, **characterized in that** the polyolefin layer (w3) is polyethylene, and the adhesive layer (w4) based on ethylene copolymer is polyethylene modified with maleic anhydride.

3. An external protective coating according to claim 1, **characterized in that** the polyolefin layer (w3) is polypropylene, and the adhesive layer (w4) based on propylene copolymer is polypropylene modified with maleic anhydride.

4. A pipe (P1) with an external protective coating, **characterized in that** it comprises a protective coating according to any one of claims 1 to 3.

5. A method for manufacturing an external protective coating for a pipe (P1) according to claim 1, comprising the following sequential known technological operations: preparation of the external surface of the pipe (P1), heating of the area of the pipe (P1) to a technological temperature, application of three successive layers of anti-corrosion insulation: an epoxy layer (w1), a polyethylene copolymer layer (w2), and a polyolefin layer (w3), and then - application of a mechanical insulation (w5), which is a laminate coating layer based on polyester or epoxy resins and glass fibre fabric, **characterized in that** before applying the mechanical insulation layer (w5) onto the polyolefin layer (w3), heated to a temperature in the range of 170 °C to 230 °C, a powder of ethylene copolymer modified with maleic anhydride or a powder of propylene copolymer modified with maleic anhydride is applied, forming an additional adhesive layer (w4), wherein the application of the powder is performed uniformly with respect to the rotational speed and translational speed of the pipe (P1).

6. The method according to claim 5, **characterized in that** the application of the powder of ethylene copolymer or the powder of propylene copolymer is performed by means of a rotating drum (6) with a profiled roller surface, having uniformly distributed longitudinal grooves, rotating uniformly with respect to its axis, which is parallel to the axis of rotation of the pipe (P1).

7. The method according to claim 5 or 6, **characterized in that** the applied powder of ethylene copolymer or propylene copolymer is additionally pressed into the polyolefin layer (w3) by means of a roller (8), rolling on its surface.

8. The method according to claim 5, **characterized in that** the polyolefin layer (w3) is additionally heated before the application of the adhesive layer (w4).

9. The method according to claim 5, **characterized in that** polyethylene is used as the polyolefin layer (w3), and polyethylene modified with maleic anhydride is used as the adhesive layer (w4) based on ethylene copolymer.

10. The method according to claim 5, **characterized in that** polypropylene is used as the polyolefin layer (w3), and polypropylene modified with maleic anhydride is used as the adhesive layer (w4) based on propylene copolymer.
